# EUROPÄISCHE PATENTANMELDUNG

(11) **EP 4 810 210 A1**
(43) Veröffentlichungstag der Anmeldung: **23.09.2026**
(21) Anmeldenummer: 26156613.7
(22) Anmeldetag: 05.02.2026
(51) Int. Cl.: B25J 15/00

(54) **GREIFERENDKAPPE UND GREIFER FÜR WÄSCHESTÜCKE MIT ZWEI GREIFERENDKAPPEN**

(30) Priorität: 18.03.2025 DE 102025110427
(71) Anmelder: Herbert Kannegiesser GmbH, 32602 Vlotho (DE)
(72) Erfinder: Regier, Eduard, 33818 Leopoldshöhe (DE); Gretschmann, Daniel, 32108 Bad Salzuflen (DE)
(74) Vertreter: Hoener, Matthias

(57) **Zusammenfassung**

Die Erfindung schafft einen Greifer für Wäschestücke sowie Greiferendkappen für Greifer, durch welche eine schonende, aber gleichermaßen wirtschaftliche Handhabung der Wäschestücke erreichbar ist. Das wird dadurch erreicht, dass zum Ergreifen von Wäschestücken Greifer (10) Greifelemente oder Greiffinger (13, 14) aufweisen. Dabei werden durch ein Verschwenken dieser Greiffinger (13, 14) die Wäschestücke (33) eingeklemmt und können dann bewegt werden. An diesen Greiffingern (13, 14) sind Greiferendkappen (15, 16) angeordnet. Die Greiferendkappen (15, 16) bestehen im Wesentlichen aus einem Körper (21) mit einer wellenartigen Kontur (22, 23), die sich wenigstens abschnittsweise um den Körper (21) erstreckt. Durch das Verschwenken der Greiffinger (13, 14) werden zwei Greiferendkappen (15, 16) aufeinander zu bewegt und zwischen ihnen ein Wäschestück (33) eingeklemmt.

## Beschreibung

Die Erfindung betrifft eine Greiferendkappe für einen Greifer zum Ergreifen eines Wäschestücks gemäß dem Anspruch 1. Des Weiteren betrifft die Erfindung einen Greifer für Wäschestücke gemäß dem Anspruch 10.

Greifer der beschriebenen Art finden in Wäschereien beispielsweise beim Ergreifen von Wäschestücken zum Zuführen selbiger zu weiteren Wäschebehandlungseinrichtung, wie beispielsweise Transportsystemen, Speicher- und Sortierstrecken und dergleichen, oder beim Vereinzeln von Wäschestücken aus einer Ansammlung mehrerer Wäschestücke Verwendung.

Bekannte Greifer sind beweglich an einem Roboterarm angeordnet und weisen beispielsweise zwei platten- oder zangenartige Greifelemente auf, die relativ zueinander beweglich sind, um Wäschestücke einzuklemmen und zu bewegen.

Für eine wirtschaftliche Anwendung von Greifern ist es wesentlich, dass das Ergreifen der einzelnen Wäschestücke zuverlässig erfolgt und vor allen Dingen schnell; gleichermaßen ist jedoch auch ein schonendes Ergreifen notwendig, um die Wäsche vor einem Qualitätsverlust zu schützen. Insbesondere bei schnellen Bewegungen besteht die Gefahr, dass durch den Greifer ergriffene Wäschestücke aus dem Greifer herausrutschen. Bei schnellen Bewegungen der an dem Greifer hängenden Wäschestücken wirkt darüber hinaus nicht nur das Eigengewicht auf den Bereich, an dem die Wäsche ergriffen wird, sondern bedingt durch die hohe Beschleunigung weitere Scheinkräfte, die sich negativ auf den Zustand der einzelnen Wäschestücke auswirken können. Beim Vereinzeln einzelner Wäschestücke aus einem Wäschehaufen, bestehend aus ineinander verschlungenen Wäschestücken, entstehen weitere Lasten, welche durch den Greifer aufzunehmen sind. Wenn diese Lasten zu hoch sind, gilt es, eine Schädigung der Wäschestücke zu vermeiden.

Der Erfindung liegt die Aufgabe zugrunde, einen Greifer für Wäschestücke sowie Greiferendkappen für Greifer zu schaffen, durch welche eine schonende, aber gleichermaßen wirtschaftliche Handhabung der Wäschestücke erreichbar ist.

Zur Lösung dieser Aufgabe weist die erfindungsgemäße Greiferendkappe die Merkmale des Anspruchs 1 auf. Zum Ergreifen von Wäschestücken, insbesondere von einzelnen Wäschestücken, weisen Greifer Greifelemente oder Greiffinger auf. Dabei werden durch ein Verschwenken dieser Greiffinger die Wäschestücke eingeklemmt und können dann bewegt werden. An diesen Greiffingern sind die erfindungsgemäßen Greiferendkappen angeordnet. Die Greiferendkappen für einen Greifer dienen zum Ergreifen von Wäschestücken, vorzugsweise von einzelnen Wäschestücken. Dabei bestehen diese Greiferendkappen im Wesentlichen aus einem Körper mit einer wellenartigen Kontur, die sich wenigstens abschnittsweise um den Körper erstreckt. Durch das Verschwenken der Greiffinger werden zwei Greiferendkappen aufeinander zu bewegt und - sofern sich zwischen den Greiferfingern ein Wäschestück befindet - zwischen ihnen ein Wäschestück eingeklemmt. Aufgrund der rillenartigen Kontur wird das Wäschestück sicher bzw. verlässlich ergriffen und zwar ohne, dass das Wäschestück aufgrund von scharfen Kanten oder dergleichen beschädigt wird. Das ermöglicht sowohl eine schonende, aber vor allen Dingen auch eine wirtschaftliche Handhabung der Wäschestücke.

Bevorzugt kann es außerdem vorgesehen sein, dass der Körper eine rechteckige, polygonale, abgerundete, ovale oder elliptische Grundfläche und/oder einen rechteckigen, polygonalen, abgerundeten, ovalen oder elliptischen Querschnitt aufweist. Durch diese im wesentlichen abgerundete Form der Greiferendkappe weist diese keinerlei scharfe Kanten auf, die zu einer Schädigung der Wäschestücke führen könnte. Darüber hinaus wird durch diese Formwahl vermieden, dass sich etwaige Wäschestücke hinter einer Kante verklemmen und die weitere Handhabung von Wäschestücken so behindert.

Insbesondere kann es vorgesehen sein, dass sich die wellenartige Kontur wenigstens abschnittsweise um eine Mantelfläche des Körpers erstreckt, wobei die Kontur aus von dem Körper wegweisenden und in den Körper hineinragenden Halb- und/oder Teilkreisen gebildet ist. Insbesondere im Querschnitt nimmt die Kontur die Form von Halb- und/oder Teilkreisen an. Dieser wellenartige Übergang von Wellen und Wellentälern bildet eine besonders bevorzugte kontinuierliche Mantelfläche, an die sich das ergriffene Wäschestücke besonders schonend anschließen kann.

Ein weiteres vorteilhaftes Ausführungsbeispiel der Erfindung kann es vorsehen, dass die Kontur als parallel verlaufende Rille und Wulst ausgebildet ist, wobei die Kontur eine Rille und eine Wulst, zwei Rillen und eine Wulst, eine Rille und zwei Wülste, zwei Rillen und zwei Wülste oder mehrere Rillen und mehrere Wülste aufweist. Es ist vorgesehen, dass die Greiferendkappe jeweils eine Rille mehr aufweist als eine Wulst bzw. eine Wulst mehr aufweist als eine Rille. Es ist allerdings auch denkbar, dass Wulst und Rille in einer gleichen Anzahl vorkommen. Während die Wulst als wellentalähnlich ausgebildet ist, stellt die Rille eine Welle dar. Sowohl die Rille als auch die Wulst bzw. die mehreren Rillen und Wülste sind als durchgängige Kontur parallel zueinander auf der Mantelfläche des Körpers ausgebildet. Dabei sind die Rille und die Wulst senkrecht zu einer vertikalen Achse orientiert.

Weiter ist es erfindungsgemäß denkbar, dass sich die Kontur um den gesamten Körper, nämlich um alle vier Seiten, erstreckt, dass sich die Kontur nur um drei Seiten, nämlich zwei kurze Seiten und eine lange Seite erstreckt, oder dass sich die Kontur nur entlang einer Seite, nämlich um eine lange Seite erstreckt, oder dass sich die Kontur teilweise um den gesamten Körper erstreckt. Je nach Anwendung ist es denkbar, dass die Kontur der Greiferendkappe andersartig ausgebildet ist. Sofern die Kontur sich wenigstens weitestgehend um den gesamten Körper erstreckt, lässt sich die Greiferendkappe sehr universell einsetzen, ohne dass es auf eine bestimmte Ausrichtung des Greifers ankommt. Wesentlich ist nur, dass die beiden Greiferendkappen eines Greifers zusammengeführt werden. Durch die nahezu umlaufende Kontur kann sichergestellt werden, dass keine spitzen oder scharfen Kanten mit den Wäschestücken in Kontakt treten und diese beschädigen.

Bevorzugt ist es denkbar, dass der Körper eine Bohrung, einen Durchbruch oder eine Aufnahme für einen Greiferfinger aufweist, wobei sich die Bohrung, der Durchbruch oder die Aufnahme vorzugsweise vertikal oder horizontal wenigstens teilweise durch den Körper erstreckt. Außerdem ist es denkbar, dass der Bohrung, dem Durchbruch oder der Aufnahme Befestigungsmittel zugeordnet sind, die senkrecht zu der Bohrung, dem Durchbruch oder der Aufnahme in dem Körper angeordnet sind, wobei es sich hierbei insbesondere um Bohrungen oder Gewindebohrungen handelt. Für eine ausreichende Stabilität wird der Greiferfinger des Greifers in die Aufnahme der Greiferendkappe geschoben und festgesetzt. Dies kann durch ein Klemmmittel, ein Rastmittel, ein Schraubmittel oder dergleichen erfolgen. Auch ein permanentes Verkleben ist denkbar.

Für eine ausreichende Stabilität der Befestigung der Greiferendkappe an einem Greifer ist es erfindungsgemäß denkbar, dass der Körper an einer Seite eine Verstärkung aufweist, in der das mindestens eine Befestigungsmittel angeordnet ist. Diese Verstärkung, die plattenartig ausgebildet sein kann, ist einer Seite, insbesondere einer langen Seite, des Körpers zugeordnet. Durch diese Verstärkung der Wandung erhält ein Befestigungsmittel, wie beispielsweise eine Schraube, genügend Kontaktfläche, um mit einem ausreichenden Kraftschluss mit der Greiferendkappe verbunden zu werden.

Es ist erfindungsgemäß denkbar, dass der Körper aus einem Metall, insbesondere Aluminium, oder einem Kunststoff, insbesondere Polyamid, hergestellt ist. Insbesondere Polyamid ist günstig und einfach zu bearbeiten. Darüber hinaus weist es eine ausreichende mechanische Stabilität auf, um eine lange Einsatzzeit, die Form und die Stabilität zu wahren.

Eine weitere Lösung der eingangs genannten Aufgabe wird durch den Greifer nach Anspruch 10 beschrieben. Der erfindungsgemäße Greifer für Wäschestücke weist einen Greiferkörper auf, der beweglich an einer Handhabungseinrichtung befestigt ist. Bei dieser Handhabungseinrichtung kann es sich beispielsweise um einen Roboterarm, ein Greif-Hebemodul oder dergleichen handeln. An dem Greiferkörper sind mindestens zwei bewegliche bzw. verschwenkbare Greiferfinger angeordnet. An jedem dieser Greiferfinger ist eine Greiferendkappe, nämlich eine erste und eine zweite Greiferendkappe, gemäß den Merkmalen des Anspruchs 1 befestigt. Es ist denkbar, dass die Greiferendkappen lösbar an den Fingern befestigt sind. Die beiden Greiferendkappen sind über die Greiferfinger in eine geöffnete, ein Wäschestück freigebende und in eine geschlossene, ein Wäschestück erfassende Stellung schwenkbar.

Ein besonders bevorzugtes Ausführungsbeispiel der Erfindung kann es vorsehen, dass Konturen der beiden Greiferendkappen komplementär zueinander ausgebildet sind. Dabei ist es denkbar, dass die Kontur der ersten Greiferendkappe eine, zwei oder mehr Rillen und die Kontur der zweiten Greiferendkappe zwei, eine oder mehr Rillen aufweist und die Kontur der ersten Greiferendkappe zwei, eine oder mehr Wülste und die Kontur der zweiten Greiferendkappe eine, zwei oder mehr Wülste aufweist. Der Greifer weist demnach zwei unterschiedliche Kappen mit einer wellenförmig Kontur auf. Diese Konturen greifen in der geschlossenen Stellung ineinander. Durch die spezielle Wellenform der ineinandergreifen Kontur wird eine einfache sowie zuverlässige Einklemmung des Wäschestücks erreicht. Dabei entsteht insbesondere eine Reibung zwischen den Flächen der Konturen, durch welche ein hoher Kraftschluss auf die Wäsche ausgeübt werden kann. Durch die vergrößerte Kontaktfläche mit den Wäschestücken verteilt sich die auf die Wäschestücke wirkende Kraft, was sich besonders schonend auf die Wäschestücke auswirkt. Durch die Formgebung der Kappen lassen sich so einzelne Wäschestücke bei einer hohen Last aus dem Wäschehaufen herausziehen. Die ineinandergreifenden Konturen bzw. der daraus resultierende Kraftschluss ist erfindungsgemäß genau derart ausgelegt, dass alle für die Funktion notwendigen Lasten aufgenommen werden können. Wäscheschädigende Überlasten werden jedoch dadurch vermieden, dass das Wäschestück bei den übermäßigen Lasten aus den Konturen herausgleiten. Dadurch lässt sich eine besonders zuverlässige, aber gleichermaßen wäscheschonende Handhabung der Wäschestücke realisieren.

Ein weiteres bevorzugtes Ausführungsbeispiel der Erfindung sieht es vor, dass die erste Greiferendkappe und die zweite Greiferendkappe über Montagemittel an den Greiffingern befestigt sind. Dieses zusätzliche Montagemittel vereinfacht die Montage bzw. den Wechsel oder Austausch der Greiffinger. So lässt sich auch die Wartung oder eine Reparatur auf eine schnelle und einfache Art und Weise durchführen. Bei diesen Montagemitteln kann es sich beispielsweise um Bleche handeln, die sich sowohl auf einfache Art und Weise mit den Greiferfinger als auch mit den Greiferendkappen verbinden lassen.

Weitere Merkmale, Vorteile und Einzelheiten der Erfindung ergeben sich aus der nachfolgenden Beschreibung eines bevorzugten Ausführungsbeispiels der Erfindung, die hiernach anhand der Zeichnung näher erläutert wird. In dieser zeigen:
- Fig. 1: Greifer in geöffneter Stellung,
- Fig. 2: Greifer in geschlossener Stellung,
- Fig. 3a: eine perspektivische Darstellung einer ersten Greiferendkappe,
- Fig. 3b: eine perspektivische Darstellung einer zweiten Greiferendkappe,
- Fig. 4a: eine perspektivische Darstellung der ersten Greiferendkappe,
- Fig. 4b: eine perspektivische Darstellung der zweiten Greiferendkappe,
- Fig. 5a: eine perspektivische Darstellung der ersten Greiferendkappe,
- Fig. 5b: eine perspektivische Darstellung der zweiten Greiferendkappe,
- Fig. 6a: eine Schnittdarstellung durch die erste Greiferendkappe,
- Fig. 6b: eine Schnittdarstellung durch die zweite Greiferendkappe,
- Fig. 7: eine Schnittdarstellung durch eine Greiferendkappe,
- Fig. 8: eine Seitenansicht einer Greiferendkappe,
- Fig. 9: eine Darstellung der Greiferendkappen, und
- Fig. 10: eine Darstellung der Greiferendkappen mit einem ergriffenen Wäschestück.

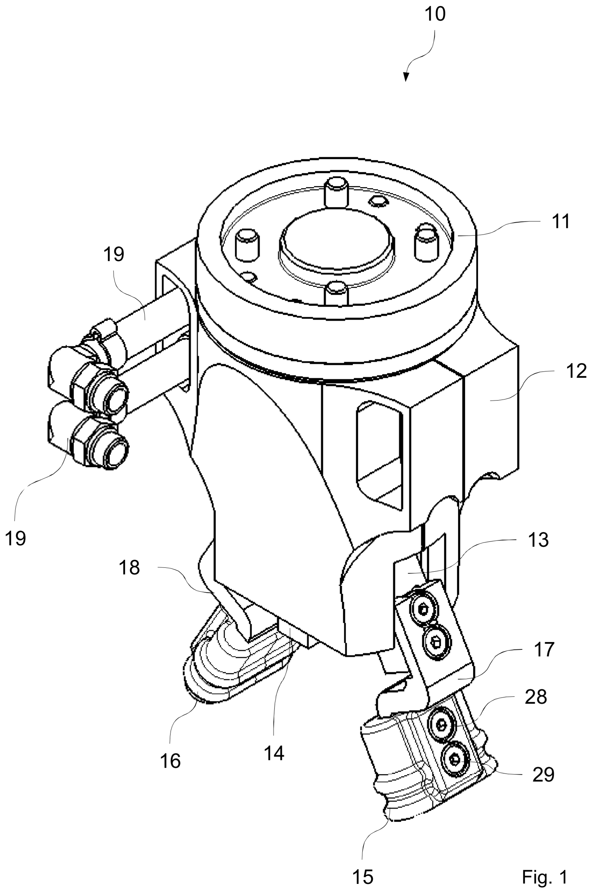

Zur automatischen Handhabung von Wäschestücken ist es insbesondere in Wäschereien vorgesehen, dass einzelne Wäschestücke von einem Greifer 10 angefahren und erfasst werden. Ein mögliches Ausführungsbeispiel eines derartigen Greifers 10 ist in der Fig. 1 dargestellt. Für die automatische Handhabung der Wäschestücke kann der Greifer 10 über eine Montageplatte 11 mit einem nicht dargestellten Roboterarm oder dergleichen verbunden sein. Durch diesen Roboterarm, bei dem es sich gleichermaßen um einen Delta-Roboter oder dergleichen handeln kann, lässt sich der Greifer 10, durch eine entsprechende Steuereinheit gesteuert, an Wäschestücke, insbesondere einen Wäschehaufen oder einzelne Wäschestücke, heranfahren. Durch den Greifer 10 sind einzelne Wäschestücke greifbar und weiteren Behandlungsstation, wie beispielsweise einer Sortierstation oder einer Wascheinrichtung, zuführbar.

Der Greifer 10 besteht im Wesentlichen aus einem Greiferkörper 12, an dem bei dem in der Fig. 1 dargestellten Ausführungsbeispiel an einem der Montageplatte 11 gegenüberliegenden Ende zwei Greiferfinger 13, 14 beweglich angeordnet sind. Während diese Greiferfinger 13, 14 mit einem Ende beweglich an dem Greiferkörper 12 befestigt sind, weisen die anderen Enden erfindungsgemäß jeweils eine Greiferendkappe 15, 16 auf.

Diese Greiferendkappen 15, 16 können direkt an den Greiferfingern 13, 14 befestigt sein. Gleichermaßen ist es denkbar, dass die Greiferendkappen 15, 16 an einem Montagemittel 17, 18 befestigt sind, die wiederum an den Greiferfingern 13, 14 befestigt sind. Bei dem in der Fig. 1 dargestellten Ausführungsbeispiel des Greifers 10 sind die vorgenannten Komponenten miteinander verschraubt. Es ist jedoch gleichermaßen denkbar, dass die genannten Komponenten miteinander verrastet oder verklemmt sind.

Die beiden Greiferfinger 13, 14 sind mitsamt den Greiferendkappen 15, 16 gegeneinander verschwenkbar. In der Fig. 1 sind die Greiferfinger 13, 14 nach außen verschwenkt, so dass die Greiferendkappen 15, 16 voneinander beabstandet sind, um ein Wäschestück aufzunehmen. Die Greiferfinger 13, 14 sind bei dem in der Fig. 1 dargestellten Ausführungsbeispiel pneumatisch bedienbar. Dazu sind an dem Greiferkörper 12 entsprechende Pneumatikanschlüsse 19 vorgesehen. Über die nicht dargestellte Steuereinheit werden diese Anschlüsse 19 derart gesteuert, dass Greiferfinger 13, 14 in die entsprechende Position verschwenkt werden, insbesondere geöffnet oder geschlossen werden. Gleichermaßen ist es denkbar, dass die Greiferfinger 13, 14 mechanisch beweglich sind und der Greiferkörper 12 dazu einen entsprechenden Elektromotor aufweist. Darüber hinaus ist es denkbar, dass der Greifer 10 hydraulisch betrieben wird.

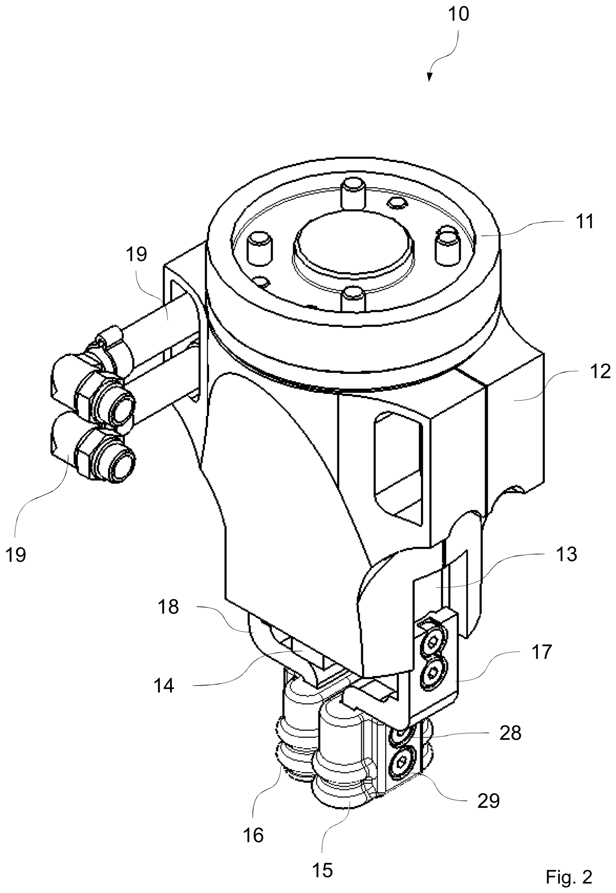

In der Fig. 2 ist der Greifer 10 aus der Fig. 1 dargestellt allerdings in der geschlossenen Stellung. Dazu sind die beiden Greiferfinger 13, 14 mit den Greiferendkappen 15, 16 derart relativ zueinander verschwenkt, dass die Greiferendkappen 15, 16 sich berühren. Sofern sich in dieser Stellung zwischen den beiden Greiferendkappen 15, 16 ein Wäschestück befindet, kann dieses durch den Greifer 10 einer folgenden Behandlungseinrichtung zugeführt werden. Bedingt durch die erfindungsgemäße Form der Greiferendkappen 15, 16 lässt sich das Wäschestück auf eine sehr zuverlässige und einfache Art und Weise bewegen.

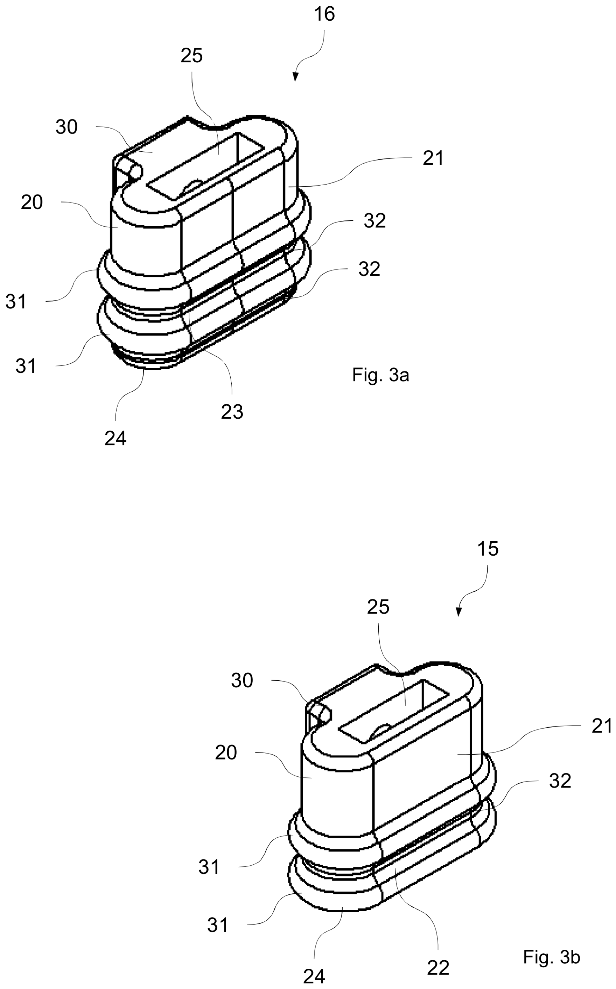

Während die Fig. 3a ein Ausführungsbeispiel einer ersten Greiferendkappe 15 zeigt, ist in der Fig. 3b ein entsprechendes Ausführungsbeispiel einer zweiten Greiferendkappe 16 dargestellt. Die beiden Greiferendkappen 15, 16 sind, abgesehen von ihr Kontur 22, 23, d. h. den Mantelflächen 20 des Körpers 21, identisch. Daher werden für gleichen Merkmale der beiden Greiferendkappen 15, 16 auch gleiche Bezugsziffern verwendet.

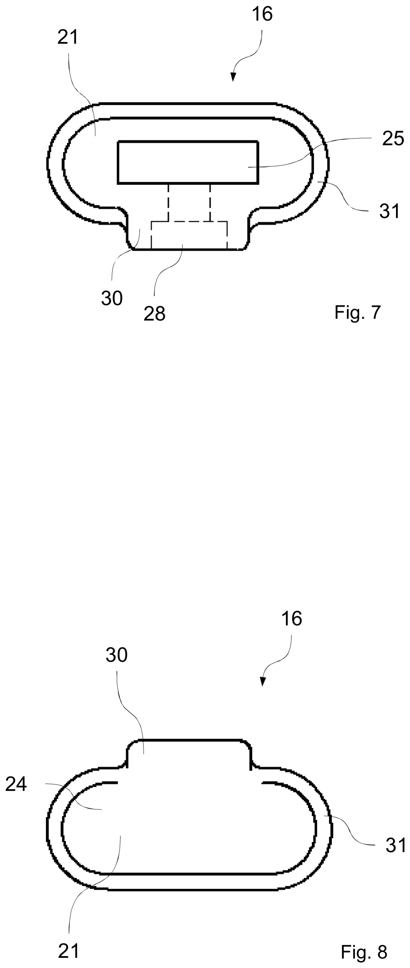

Der Körper 21 der Greiferendkappe 15, 16 weist bei dem hier dargestellten Ausführungsbeispiel eine ovale Form auf. Dies wird durch die Fig. 8 besonders gut ersichtlich. Dort ist die Sicht auf eine Grundfläche 24 der Greiferendkappe 15, 16 wiedergegeben, wobei die Form der Grundfläche 24 identisch ist mit dem Querschnitt der Greiferendkappe 15, 16 (s. Fig. 7). Gleichermaßen ist es denkbar, dass der Körper 21 eine rechteckige, eine runde, eine elliptische oder eine ähnlich geformte Grundfläche 24 aufweist.

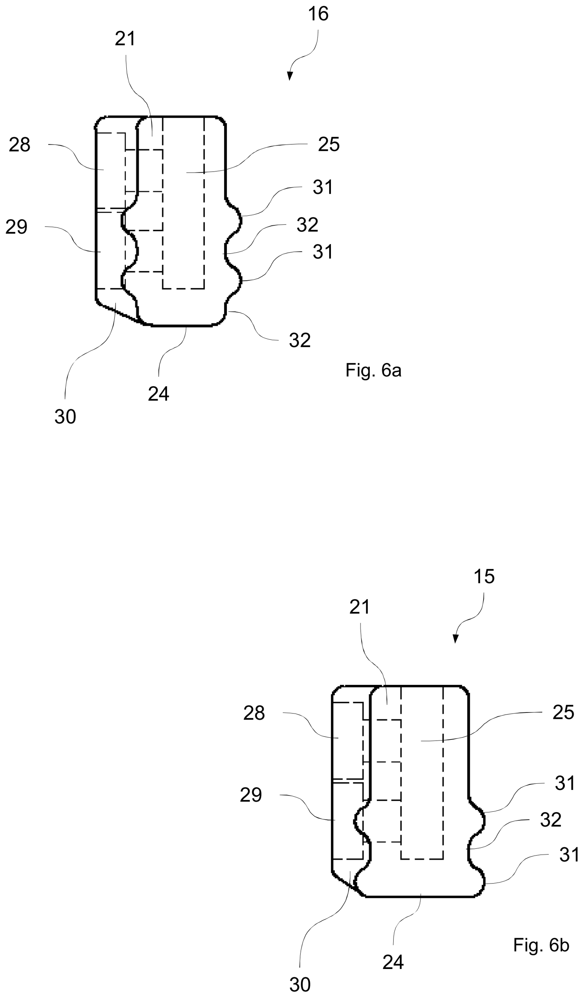

Der Körper 21 weist eine Aufnahme 25 auf, in der sich ein Greiferfinger 13, 14 bzw. ein Montagemittel 17, 18 einführen lässt. Dabei ist es denkbar, dass der Greiferfinger 13, 14 bzw. das Montagemittel 17,18 in der Aufnahme 25 verpresst oder verrastet ist. Bei dem hier dargestellten Ausführungsbeispiel ist es vorgesehen, dass die Montagemittel 17, 18 mit dem Körper 21 verschraubt werden. Bei dem hier dargestellten Ausführungsbeispiel der Greiferendkappe 15, 16 weist die Aufnahme 25 einen rechteckigen Querschnitt auf. Dies geht beispielsweise aus der Fig. 7 hervor. Letztendlich kann die Aufnahme 25 aber auch eine andere Form aufweisen und ist im Wesentlichen abhängig von der Form der Greiferfinger 13, 14. Eine rechteckige Form hat sich allerdings als besonders vorteilhaft erwiesen, da der Kraftübertrag zwischen den Greiferfingern 13, 14 bzw. dem Montagemittel 17, 18 und dem Körper 21 durch diese Form besonders groß ist bzw. ein Verschrauben der genannten Komponenten besonders effizient erfolgen kann. Darüber hinaus lässt sich den Fig. 6a und 6b entnehmen, dass die Aufnahme 25 sich nicht durch den gesamten Körper 21 erstreckt, sondern eher ein Sackloch darstellt. Aus den gleichen Figuren, nämlich aus den Fig. 6a, 6b und 7, geht hervor, dass der Körper zwei Bohrungen 26, 27 aufweist. Diese Bohrungen 26, 27 erstrecken sich durch den Körper 21, und zwar senkrecht zu der Aufnahme 25. Diese Bohrungen 26, 27 dienen der Aufnahme einer Schraube 29, um die Greiferendkappen 15, 16 mit den Greiferfingern 13, 14 bzw. den Montagemitteln 17, 18 zu verschrauben. Dazu weisen die Greiferfinger 13, 14 bzw. die Montagemittel 17, 18 entsprechende Gewinde auf. Bei dem hier dargestellten Ausführungsbeispiel sind die Bohrungen derart ausgeführt, dass die Schrauben 28, 29 versenkt werden und nicht über die Mantelfläche 20 des Körpers 21 hinausragen, sondern vielmehr eine ebene Fläche mit der Mantelfläche 20 bilden. Gleichermaßen ist es natürlich auch denkbar, dass der Körper 21 nur eine Bohrung aufweist oder drei oder mehr. Damit die Schrauben 28, 29 mit der erforderlichen Kraft beaufschlagbar sind, um die Greiferendkappen 15, 16 mit den Montagemitteln 17, 18 zu verschrauben, ist es bei dem hier dargestellten Ausführungsbeispiel vorgesehen, dass der Körper 21 eine Verstärkung 30 aufweist. Diese Verstärkung 30 ist im Wesentlichen eine Verdickung des Körpers an der Seite, an der sich die Bohrungen 26, 27 befinden. Dies geht beispielsweise aus den Fig. 7 und 8 hervor.

Für ein zuverlässiges sowie schonendes Ergreifen der Wäschestücke ist es erfindungsgemäß vorgesehen, dass die Konturen 22, 23 der beiden Greiferendkappen 15, 16 unterschiedlich ausgebildet sind. Die Konturen 22, 23 der Greiferendkappen 15, 16 sind im Wesentlichen wellenartig ausgebildet. Diese Wellenartigkeit wird gebildet durch Wulste 31, zwischen denen sich eine Rille 32 ausbildet. Diese Wulste 31 und die Rille 32 erstreckt sich wenigstens weitestgehend um die Mantelfläche 20 des Körpers 21. Aus den Fig. 7, 8 geht hervor, dass sich die Wulste 31 und die Rille 32 um die Verstärkung 30 erstreckt. Gleichermaßen ist es aber auch denkbar, dass sich die Wulste 31 und die Rille 32 um die gesamte Mantelfläche 20 erstreckt. Bei dem in der Fig. 3a dargestellten Ausführungsbeispiel ist zu erkennen, dass sich zwei Wulste 31 um den Körper 21 erstrecken, während zwischen den beiden Wulsten 31 eine Rille 32 ausgebildet ist. Dadurch, dass die untere Wulst 31 von der Grundfläche 24 beabstandet ist, bildet sich zwischen dieser Grundfläche 24 und der unteren Wulst 31 ebenfalls eine Rille 32 aus. Dies geht besonders deutlich aus dem in der Fig. 6a dargestellten Schnitt durch die erste Greiferendkappe 15 hervor.

Komplementär zu der in der Fig 3a dargestellten ersten Greiferendkappe 15 sind bei der in der Fig. 3b dargestellten zweiten Greiferendkappe 16 die beiden Wulste 31 nach unten, nämlich zu der Grundfläche 24, verschoben. Dies geht besonders deutlich aus der Fig. 6b hervor. Auch hier bildet sich zwischen den beiden Wulst 31 eine Rille 32 aus. Dadurch, dass eine Wulst 31 bei dem Ausführungsbeispiel gemäß der Fig. 3b direkt an die Grundfläche 24 stößt, ist hier keine weitere Rille ausgebildet.

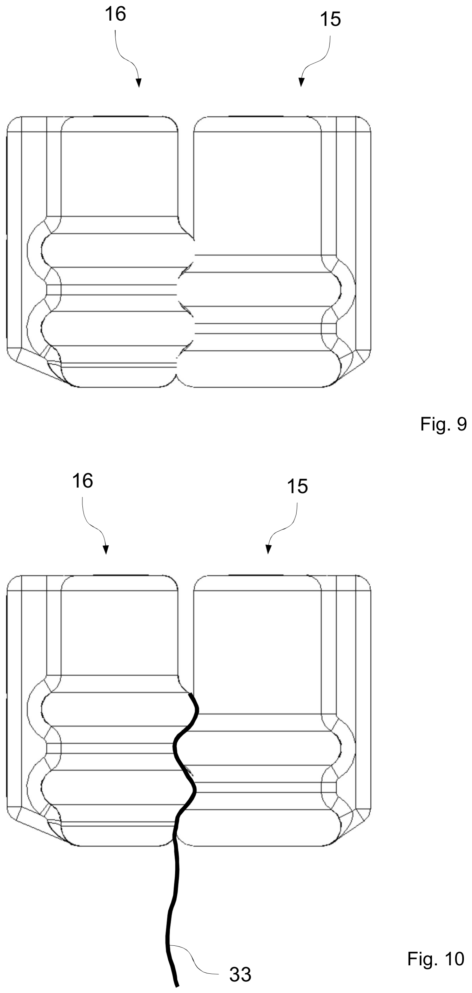

Die Wulste 31 und die Rillen 32 der ersten und zweiten Greiferendkappe 15, 16 sind derart auf der Mantelfläche 20 gegeneinander verschoben, dass sie in der geschlossenen Stellung ineinandergreifen. Dies ist beispielsweise in der Fig. 2, aber vor allen Dingen in den Fig. 9 und 10 dargestellt. Allerdings sind die hier dargestellten Ausführungsbeispiele nicht derart ausgebildet, dass die Wulste 31 und Rillen 32 der verschiedenen Endkappen 15, 16 formschlüssig ineinandergreifen. Wenn sich jetzt beim Schließen bzw. Verschwenken der Greiferfinger 13, 14 zwischen den beiden Greiferendkappen 15, 16 bzw. zwischen den beiden Konturen 22, 23 ein Wäschestück 33 befindet, so wird dies zwischen den Wulsten 31 und Rillen 32 eingeklemmt. Die Kontaktfläche zwischen dem Wäschestück 33 und den Endkappen 15, 16 ist derart bemessen, dass die auf das Wäschestück 33 wirkende Kraft sich über einen größeren Bereich verteilt, was sich besonders schonend auf das Wäschestück 33 auswirkt. Andererseits ist die Kraft, die auf das Wäschestück 33 übertragen wird, ausreichend groß, um das Wäschestück 33 auf eine zuverlässige Art und Weise aus beispielsweise einem Wäschehaufen herauszuziehen und der weiteren Behandlung zuzuführen. Insbesondere durch die Form der Wulst 31 und der Rille 32 wird das Wäschestück 33 nicht nur eingeklemmt, sondern wird vielmehr eine Reibung zwischen den Greiferendkappen 15, 16 und dem Wäschestück 33 erzeugt, durch die eine besonders effiziente Kraftübertragung möglich wird.

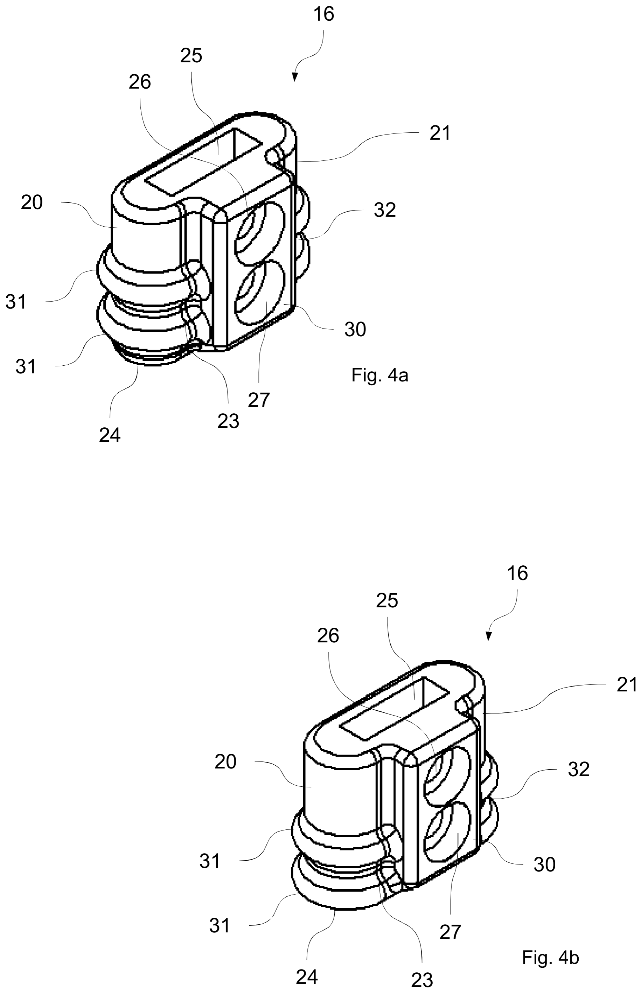

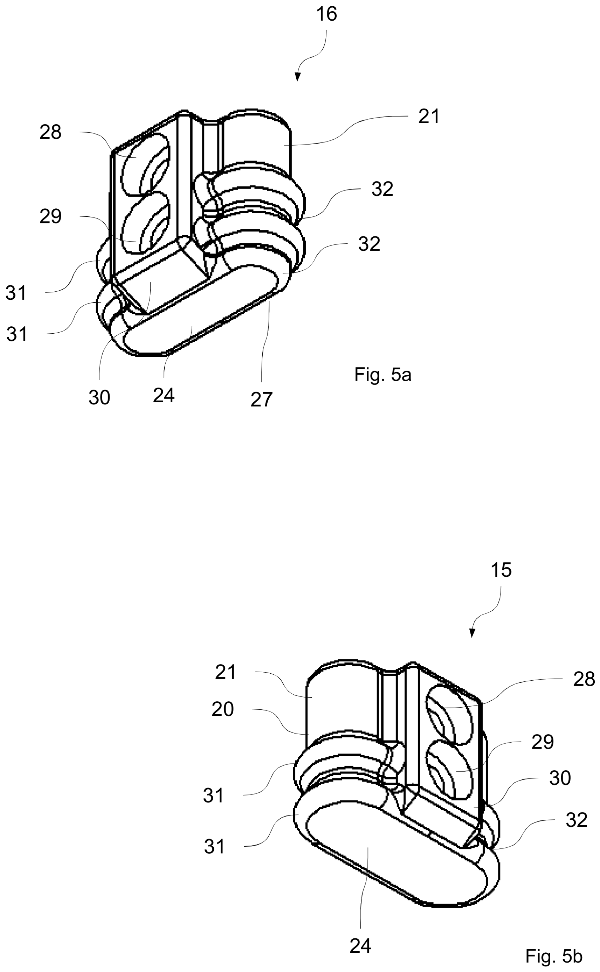

Insbesondere aus den Fig. 3 bis 5 geht sehr deutlich hervor, dass der Körper 21 nahezu ausschließlich runde Formen aufweist und keine spitzen Kanten bzw. Ecken, durch welche das Wäschestück 33 beschädigt werden könnte. Auch für den Fall, dass sich ein Wäschestück 33 ungewollt an den Greiferendkappen 15, 16 verhakt, kann eine irreversible Schädigung durch diese runde Formgebung verhindert werden.

### Bezugszeichenliste:

- 10: Greifer
- 11: Montageplatte
- 12: Greiferkörper
- 13: Greiferfinger
- 14: Greiferfinger
- 15: erste Greiferendkappe
- 16: zweite Greiferendkappe
- 17: Montagemittel
- 18: Montagemittel
- 19: Pneumatikanschluss
- 20: Mantelfläche
- 21: Körper
- 22: Kontur
- 23: Kontur
- 24: Grundfläche
- 25: Aufnahme
- 26: Bohrung
- 27: Bohrung
- 28: Schraube
- 29: Schraube
- 30: Verstärkung
- 31: Wulst
- 32: Rille
- 33: Wäschestück

## Patentansprüche

1. Greiferendkappe (15, 16) für einen Greifer (10) zum Ergreifen eines Wäschestücks (33), bestehend aus einem Körper (21) mit einer wellenartigen Kontur (22, 23), die sich wenigstens abschnittsweise um den Körper (21) erstreckt.

2. Greiferendkappe (15, 16) für einen Greifer (10) nach Anspruch 1, **dadurch gekennzeichnet, dass** der Körper (21) eine rechteckige, polygonale, abgerundete, ovale oder elliptische Grundfläche (24) und/oder einen rechteckigen, polygonalen, abgerundeten, ovalen oder elliptischen Querschnitt aufweist.

3. Greiferendkappe (15, 16) für einen Greifer (10) nach Anspruch 1 oder 2, **dadurch gekennzeichnet, dass** sich die wellenartige Kontur (22, 23) wenigstens abschnittsweise um eine Mantelfläche (20) des Körpers (21) erstreckt, wobei die Kontur (22, 23) aus von dem Körper (21) wegweisenden und in den Körper (21) hineinragenden Halb- und/oder Teilkreisen gebildet ist.

4. Greiferendkappe (15, 16) für einen Greifer (10) nach einem der vorhergehenden Ansprüche, **dadurch gekennzeichnet, dass** die Kontur (22, 23) als parallel verlaufende Rille (32) und Wulst (31) ausgebildet ist, wobei die Kontur (22, 23) eine Rille (32) und eine Wulst (31), zwei Rillen (32) und eine Wulst (31), eine Rille (32) und zwei Wulste (31), zwei Rillen (32) und zwei Wulste (31) oder mehrere Rillen (32) und mehrere Wulste (31) aufweist.

5. Greiferendkappe (15, 16) für einen Greifer (10) nach einem der vorhergehenden Ansprüche, **dadurch gekennzeichnet, dass** sich die Kontur (22, 23) um den gesamten Körper (21), nämlich um alle vier Seiten, erstreckt, dass sich die Kontur (22, 23) nur um drei Seiten, nämlich zwei kurze Seiten und eine lange Seite, erstreckt oder dass sich die Kontur (22, 23) nur entlang einer Seite, nämlich um eine lange Seite, erstreckt oder dass sich die Kontur (22, 23) teilweise um den gesamten Körper (21) erstreckt.

6. Greiferendkappe (15, 16) für einen Greifer (10) nach einem der vorhergehenden Ansprüche, **dadurch gekennzeichnet, dass** der Körper (21) eine Bohrung, einen Durchbruch oder eine Aufnahme (25) für einen Greiferfinger (13, 14) aufweist, wobei sich die Bohrung, der Durchbruch oder die Aufnahme (25) vorzugsweise vertikal oder horizontal wenigstens teilweise durch den Körper (21) erstreckt.

7. Greiferendkappe (15, 16) für einen Greifer (10) nach Anspruch 6, **dadurch gekennzeichnet, dass** der Bohrung, dem Durchbruch oder der Aufnahme (25) Befestigungsmittel zugeordnet sind, die senkrecht zu der Bohrung, dem Durchbruch oder der Aufnahme (25) in dem Körper (21) angeordnet sind, wobei es sich hierbei insbesondere um Bohrungen (26 ,27) oder Gewindebohrungen handelt.

8. Greiferendkappe (15, 16) für einen Greifer (10) nach Anspruch 7, **dadurch gekennzeichnet, dass** der Körper (21) an einer Seite eine Verstärkung (30) aufweist, in der das mindestens eine Befestigungsmittel angeordnet ist.

9. Greiferendkappe (15, 16) für einen Greifer (10) nach einem der vorhergehenden Ansprüche, **dadurch gekennzeichnet, dass** der Körper (21) aus einem Metall, insbesondere Aluminium, oder einem Kunststoff, insbesondere Polyamid, hergestellt ist.

10. Greifer (10) für Wäschestücke mit einem Greiferkörper (12) der beweglich an einer Handhabungseinrichtung befestigbar ist und mit mindestens zwei beweglich an dem Greiferkörper (12) angeordneten Greiferfingern (13, 14), wobei an jedem der beiden Greiferfinger (13, 14) eine Greiferendkappe (15, 16), nämlich eine erste Greiferendkappe (15) und eine zweite Greiferendkappe (16), gemäß Anspruch 1 vorzusgweise lösbar befestigt sind, die über die Greiferfinger (13, 14) in eine geöffnete, ein Wäschestück (33) freigebende und in eine geschlossene, ein Wäschestück (33) erfassende Stellung schwenkbar sind.

11. Greifer (10) nach Anspruch 10, **dadurch gekennzeichnet, dass** Konturen (22, 23) der beiden Greiferendkappen (15, 16) komplementär zueinander ausgebildet sind.

12. Greifer (10) nach Anspruch 11, **dadurch gekennzeichnet, dass** die Kontur (22) der ersten Greiferendkappe (15) eine, zwei oder mehr Rillen (32) und die Kontur (23) der zweiten Greiferendkappe (16) zwei, eine oder mehr Rillen (32) aufweist und die Kontur (22) der ersten Greiferendkappe (15) zwei, eine oder mehr Wulste (31) und die Kontur (23) der zweiten Greiferendkappe (23) eine, zwei oder mehr Wulste (31) aufweist.

13. Greifer (10) nach einen der Ansprüche 10 bis 12, **dadurch gekennzeichnet, dass** die erste Greiferendkappe (15) und die zweite Greiferendkappe (16) mit ihren Konturen (22) gegenüberliegend an den Greiferfingern (13, 14) befestigt sind, so das die Konturen (22, 23) in der geschlossenen Stellung ineinanderer greifen.

14. Greifer (10) nach einen der Ansprüche 10 bis 13, **dadurch gekennzeichnet, dass** die erste Greiferendkappe (15) und die zweite Greiferendkappe (16) über Montagemittel (17, 18) an den Greiffingern (13, 14) befestigt sind.
